Europäisches Patentamt

(19) European Patent Office

Office européen des brevets

(11) Numéro de publication: **0 007 129**

**A1**

(12) # DEMANDE DE BREVET EUROPEEN

(21) Numéro de dépôt: **79200350.1**

(22) Date de dépôt: **28.06.79**

(51) Int. Cl.³: **B 21 D 51/20**
**B 23 K 13/00**

(30) Priorité: 05.07.78 BE 257115
21.06.79 BE 257894

(43) Date de publication de la demande:
23.01.80 Bulletin 80/2

(84) Etats Contractants Désignés:
DE FR GB IT NL

(71) Demandeur: **TMT Société Anonyme**
**Boulevard de la le Armée Britannique 147**
**B-1190 Bruxelles(BE)**

(72) Inventeur: **Wantiez, Bernard**
**Eeklostraat 129**
**9910 Mariakerke(BE)**

(74) Mandataire: **Bockstael, Daniel**
**Arenbergstraat 13** ▸
**B-2000 Anvers(BE)**

(54) **Procédé pour l'assemblage du corps et des fonds d'emballages métalliques et emballages résultants.**

(57) Ce procédé est caractérisé en ce qu'il consiste substantiellement à refouler un bord du corps du fût de manière à obtenir une collerette annulaire plane, perpendiculaire a l'axe dudit corps; à appliquer un fond jointivement sur cette collerette; à chauffer les zones en contact mutuel de ladite collerette et dudit fond par induction à haute fréquence; à soumettre les zones ainsi chauffées à une opération de forgeage; et à ourler ensuite ces zones pour leur donner l'aspect du sertissage traditionnel.

EP 0 007 129 A1

Croydon Printing Company Ltd

0007129

- 1 -

**Procédé pour l'assemblage du corps et des fonds d'emballages métalliques et emballages résultants.**

La présente invention concerne un procédé pour l'assemblage
du corps et des fonds d'emballages métalliques ainsi que
des emballages obtenus par l'application de ce procédé.

D'une manière générale, les emballages métalliques - plus
particulièrement des fûts - sont assemblés par roulage des
bords limitrophes du corps et des fonds du fût. Ce procédé
classique présente des difficultés lorsqu'il s'agit de
garantir une étanchéité parfaite du fût après des chutes ou
chocs répétés. Cette difficulté a amené à proposer des
enroulages doubles, voire triples desdits bords limitrophes,
lesquels ont donné de bons résultats au prix, il est vrai,
d'une consommation de matière et d'énergie relativement
importante.

On a également proposé d'assembler le corps et les fonds de
fûts métalliques par soudure.

Dans le cas de corps et fonds réalisés en tôles revêtues,
avec revêtement sur la face interne de l'emballage, l'apport
de chaleur relativement important dû à la soudure classique
entraîne une destruction partielle dudit revêtement avec
création de zones vulnérables inacceptables.

Le but de l'invention est de pallier les désavantages
susmentionnés.

A cet effet, l'invention propose un procédé d'assemblage consistant substantiellement à refouler un bord du corps du fût de manière à obtenir une collerette annulaire plane, perpendiculaire à l'axe dudit corps; à appliquer un fond jointivement sur cette collerette; à chauffer les zones en contact mutuel de ladite collerette et dudit fond par induction à haute fréquence; à soumettre les zones ainsi chauffées à une opération de forgeage; et à ourler ensuite ces zones pour leur donner l'aspect du sertissage traditionnel.

Ledit chauffage est effectué à l'aide d'au moins une électrode alimentée par un générateur fournissant un courant d'une fréquence comprise entre 5.000 et 20.000 Hz environ.

Ladite électrode assure la circulation d'un courant induit dans les extrémités de la collerette et du fond jointifs, de sorte que ces extrémités s'échauffent suffisamment rapidement que pour prévenir un transfert important de chaleur vers les parties restantes des tôles. Cette caractéristique explique l'avantage du procédé selon l'invention dans le cas de tôles revêtues.

L'électrode peut être périphérique, auquel cas tant l'électrode que le corps et le fond peuvent être statiques. Elle peut également être à action limitée, auquel cas on impartit un mouvement relatif de rotation au corps portant le fond, d'une part, et à l'électrode, d'autre part, de sorte que l'entièreté des zones à chauffer soit balayée par cette dernière.

L'opération de forgeage est obtenue à l'aide d'au moins une paire de molettes disposées à proximité immédiate de ladite électrode. Ces molettes peuvent être entraînées, le cas échéant, et la pression qu'elles exercent est préférablement réglable par un système mécanique, pneumatique ou hydraulique, en fonction des caractéristiques et des épaisseurs du matériau constitutif du corps et du fond.

L'ourlage s'effectue également à l'aide de molettes disposées soit immédiatement à la suite des molettes de forgeage, soit en un autre point de la ligne de fabrication.

Le procédé susdécrit offre, par rapport aux procédés traditionnels, de nombreux avantages, comme par exemple :

- une meilleure étanchéité et une meilleure résistance mécanique lors des chocs et chutes de par l'homogénéité de l'assemblage, ce qui est particulièrement important pour le transport de matières dangereuses;

- la possibilité d'utiliser, pour le corps et les fonds, des tôles revêtues sans que l'assemblage n'entraîne une destruction locale du revêtement et ceci de par l'apport limité de chaleur;

- une économie de matière par rapport aux sertissages doubles ou triples traditionnels;

- une économie d'énergie dans le processus de fabrication.

L'invention s'étend aux emballages obtenus par le procédé susdécrit.

Revendications.

1.- Procédé pour l'assemblage du corps et des fonds d'emballages métalliques, caractérisé en ce qu'il consiste substantiellement à refouler un bord du corps du fût de manière à obtenir une collerette annulaire plane, perpendiculaire à l'axe dudit corps; à appliquer un fond jointivement sur cette collerette; à chauffer les zones en contact mutuel de ladite collerette et dudit fond par induction à haute fréquence; à soumettre les zones ainsi chauffées à une opération de forgeage; et à ourler ensuite ces zones pour leur donner l'aspect du sertissage traditionnel.

2.- Procédé selon la revendication 1, caractérisé en ce que ledit chauffage est effectué à l'aide d'au moins une électrode alimentée à une fréquence comprise entre 5.000 et 20.000 Hz environ.

3.- Procédé selon la revendication 2, caractérisé en ce qu'un mouvement relatif de rotation est imparti au corps portant le fond, d'une part, et à l'électrode, d'autre part, de sorte que l'entièreté des zones à chauffer soit balayée par cette dernière.

4.- Procédé selon la revendication 3, caractérisé en ce que l'opération de forgeage est effectuée à l'aide de molettes disposées à proximité immédiate de ladite électrode.

5.- Emballage métallique obtenu par la mise en oeuvre du procédé selon l'une ou plusieurs des revendications précédentes.

# 0007129

Office européen
des brevets

**RAPPORT DE RECHERCHE EUROPEENNE**

Numéro de la demande

EP 79 200 350.1

| Catégorie | Citation du document avec Indication, en cas de besoin, des parties pertinentes | Revendication concernée | CLASSEMENT DE LA DEMANDE (Int. Cl.³) |
|---|---|---|---|
| | CH - A5 - 562 644 (FAIREY STAINLESS)<br>* revendications 1, 2; fig. 2 *<br>--<br>FR - A - 1 367 870 (AMERICAN LIGHT<br>GAGE DRUM CORPORATION)<br>* page 2 *<br>-- | 1<br><br>1 | B 21 D 51/20<br>B 23 K 13/00 |
| | CH - A - 468 863 (AMERICAN MACHINE &<br>FOUNDRY COMPANY)<br>* revendication 1; colonne 4 *<br>-- | 1,2 | **DOMAINES TECHNIQUES RECHERCHES (Int. Cl.³)** |
| | DE - A - 1 565 408 (AMERICAN MACHINE<br>& FOUNDRY COMPANY)<br>* revendication 1 *<br>-- | 1 | B 21 D 51/00<br>B 23 K 13/00<br>B 65 D 1/00 |
| A | US - A - 4 055 133 (WESSELY)<br>* document complet *<br>-- | | |
| A | US - A - 3 725 630 (GAGLIARDI)<br>* document complet *<br>-- | | |
| A | US - A - 2 480 376 (MARTIN)<br>* document complet *<br>---- | | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |

**DOCUMENTS CONSIDERES COMME PERTINENTS**

X Le présent rapport de recherche a été etabli pour toutes les revendications

| Lieu de la recherche | Date d'achèvement de la recherche | Examinateur |
|---|---|---|
| Berlin | 02-10-1979 | SCHLAITZ |

OEB Form 1503.1 06.78